(19) Europäisches Patentamt

European Patent Office

Office européen des brevets

(11) Veröffentlichungsnummer: **0 116 830**
**B2**

(12) **NEUE EUROPÄISCHE PATENTSCHRIFT**

(45) Veröffentlichungstag der neuen Patentschrift:
**29.08.90**

(21) Anmeldenummer: **84100185.2**

(22) Anmeldetag: **10.01.84**

(51) Int. Cl.⁵: **B 05 B 9/04,** B 05 B 7/32,
A 46 B 11/02, F 16 J 12/00,
F 04 B 41/02

(54) Druckbehälter zur Aufnahme von zu fördernden Flüssigkeiten.

(30) Priorität: **18.02.83 DE 3305657**

(43) Veröffentlichungstag der Anmeldung:
**29.08.84 Patentblatt 84/35**

(45) Bekanntmachung des Hinweises auf die
Patenterteilung:
**30.07.86 Patenblatt 86/31**

(45) Bekanntmachung des Hinweises auf die
Entscheidung über den Einspruch:
**29.08.90 Patentblatt 90/35**

(84) Benannte Vertragsstaaten:
**CH DE FR GB IT LI NL**

(56) Entgegenhaltungen:
**DE-A-2 750 220**
**DE-B-1 942 548**
**DE-U-8 014 993**
**GB-A- 351 443**
**US-A-1 465 856**
**US-A-3 322 349**
**US-A-4 261 689**

**Hütte: Des Ingenieurs Taschenbuch, 28.**
**Auflage, Teil A Maschinenbau, 1954, Seite 634.**

(73) Patentinhaber: **J. Wagner GmbH**
**Eisenbahnstrasse 18-24**
**D-7990 Friedrichshafen 1 (DE)**

(72) Erfinder: **Karliner, Rudolf**
**14715 Wychewood Road**
**Minnetonka, MN 55343 (US)**
Erfinder: **Kille, Ewald**
**Strandbadstrasse 2**
**D-7990 Friedrichshafen (DE)**

(74) Vertreter: **Engelhardt, Guido, Dipl.-Ing.**
**Patentanwalt Montafonstrasse 35 Postfach 1350**
**D-7990 Friedrichshafen 1 (DE)**

EP 0 116 830 B2

**Beschreibung**

Die Erfindung bezieht sich auf einen Druckbehälter zur Aufnahme von zu fördernden Flüssigkeiten, insbesondere zum kontinuierlichen Speisen eines über eine Schlauchleitung an diesen angeschlossenen Farbrollers, eines Füllpinsels, einer Düse oder dgl. mit einer unter Druck stehenden Flüssigkeit, wobei zur Erzeugung des Förderdruckes ein in einer Aufnahmekammer angeordneter Drucklufterzeuger vorgesehen ist, der mittels eines Druckschalters in Abhängigkeit von dem in dem Druckbehälter herrschenden Druck steuerbar ist.

Um den zum Fördern einer Farbflüssigkeit aus einem Behälter erforderlichen Druck zu erzeugen, ist es bekannt, eine mit Druckgas gefüllte Patrone an dem Behälter anzubringen, die über Ventile mit dessen Innenraum in Verbindung steht, oder das Druckmedium mittels einer pumpe über ein Ventil in den Behälter einzuspeisen (GB-A-351 443). Abgesehen davon, daß die Druckgaspatrone nur ein begrenztes Volumen aufweist und somit oftmals ausgewechselt werden muß, so daß Arbeitsunterbrechungen unvermeidbar sind und Druckgaspatronen auf Lager gehalten werden müssen bzw. der Behälter von Zeit zu Zeit an die Pumpe anzuschließen ist, ist auch eine gleichmäßige Arbeitsweise nicht gegeben, da der in dem Druckbehälter aufgebaute Druck nicht konstant bleibt, sondern ständig abnimmt. Eine gleichmäßige Förderung der Farbflüssigkeit ist demnach nicht zu erzielen, Unterschiede beim Farbauftrag sind unvermeidbar.

Des weiteren ist durch die DE-U-80 14 993 eine aus einem Druckbehälter und einer Druckluftladevorrichtung bestehende Zerstäubungseinrichtung der vorgenannten Art bekannt. Der Druckbehälter ist bei dieser Ausgestaltung seitlich neben der Druckluftladevorrichtung angeordnet und mittels einer druckdichten Steckkupplung mit dieser lösbar verbunden. Da der Druckbehälter, der den Vorratstank für das zu versprühende Medium aufnimmt, nur über einen geringen Teil seines Bodens auf dem Sockel der Druckluftladevorrichtung abgestützt ist, ist keine befriedigende Standsicherheit der Zerstäubungseinrichtung gegeben. Des weiteren baut diese zweiteilige Einrichtung groß und ist, da der seitlich angebrachte Druckbehälter nur über die Steckkupplung mit der Druckluftladevorrichtung verbunden ist, schwierig zu transportieren.

Aufgabe der Erfindung ist es daher, einen Druckbehälter zur Aufnahme von zu fördernden Flüssigkeiten der vorgenannten Art zu schaffen, der bei äußerst einfacher Handhabung, ohne daß Unterbrechungen in Kauf zu nehmen sind, eine gleichmäßige Arbeitsweise über eine nahezu unbegrenzte Zeitdauer ermöglicht. Der in dem Druckbehälter herrschende Druck soll hierbei zwischen einstellbaren Grenzwerten konstant gehalten werden können, so daß stets eine gleichmäßige Förderung gewährleistet ist. Des weiteren soll eine kompakte Bauweise und eine hohe Standsicherheit gegeben sein und der Druckbehälter soll auch einfach transportiert werden können.

Gemäß der Erfindung wird dies dadurch erreicht, daß der Drucklufterzeuger als Membran-Kompressor ausgebildet und in einer im Bodenbereich des Druckbehälters eingeformten Aufnahmekammer angeordnet ist, daß der Membran-Kompressor und/oder der Elektromotor mittels einer die Aufnahmekammer verschließenden Platte zwischen dieser und dem Behälterboden und/oder an diesen angeformten Stegen über Zwischenlagen oder Dämpfungselementen aus elastisch verformbarem Werkstoff eingeklemmt sind und daß der dem Membran-Kompressor zugeordnete Elektromotor als Linearmotor nach Art eines Schwingankermotors ausgebildet ist.

Die Druckluftleitung des Kompressors sollte zweckmäßigerweise im oberen Bereich des Druckbehälters in diesen münden. Dies kann mit Hilfe einer an der Außenwandung des Druckbehälters angebrachten Zierleiste geschehen, in die die Druckluftleitung eingesetzt wird.

Um in den Druckbehälter auch Normalbehälter einsetzen zu können, ist es ferner angebracht, an dem Behälterboden mehrere Abstandsnocken vorzusehen, auf denen sich der Behälter abstützen kann.

Zur Betätigung des Druckschalters in Abhängigkeit von dem in dem Druckraum herrschenden Druck kann in einfacher Ausgestaltung ein in den Boden des Druckbehälters eingesetzter, entgegen der Kraft einer Rückstellfeder verstellbarer, von dem in dem Druckbehälter herrrschenden Druck unmittelbar oder über eine Membran beaufschlagbarer Kolben vorgesehen werden, dessen angeformter Schaltstößel auf das Verstellglied des Druckschalters einwirkt.

In den Deckel des Druckbehälters können ein von Hand entriegelbares Überdruckventil, ein Hauptschalter, ein Manometer oder dgl. eingesetzt werden.

Des weiteren kann der Druckbehälter mit drei oder mehreren im Bodenbereich angeordneten und seitlich abstehenden Standfüßen versehen sein, wobei in einem der Standfüße ein durch Fußdruck betätigbarer Hauptschalter eingebaut werden kann.

Der gemäß der Erfindung ausgebildete Druckbehälter zur Aufnahme von zu fördernden Flüssigkeiten ist nicht nur kompakt in der konstruktiven Ausgestaltung und auf wirtschaftliche Weise herstellbar, sondern auch leicht in der Handhabung und gewährleistet vor allem, daß stets ein ausreichender Druck zur Förderung der Farbflüssigkeit zur Verfügung steht. Wird nämlich im Bodenbereich des Druckbehälters ein elektrisch antreibbarer Membran-Kompressor als Drucklufterzeuger eingebaut, der über Dämpfungselemente eingeklemmt und dessen Antriebsmotor als Linearmotor ausgebildet ist, so ist nicht nur sichergestellt, daß der Förderdruck zwischen den mittels des Druckschalters wählbaren Grenzen konstant bleibt und somit ein gleichmäßiger Farbauftrag ermöglicht wird, sondern auch, daß der Schwerpunkt des einteiligen Druckbehälters tief liegt und somit stets eine hohe Standsicherheit gegeben ist. Arbeitsunterbrechungen sind demnach nicht in Kauf zu nehmen, so daß auch zeitlich langwierige Arbeiten unter stets gleichen Bedingungen ausgeführt werden können, auch ist der einteilige kleinbauende Druckbehälter einfach in der Handhabung. Und da der Kompressor mit Hilfe des Druckschalters selbsttätig abgeschaltet wird, ist zuverlässig vermieden, daß in dem Druckbehälter, der bei eingeschaltetem Hauptschalter immer betriebsbereit ist, ein zu hoher Druck aufgebaut wird.

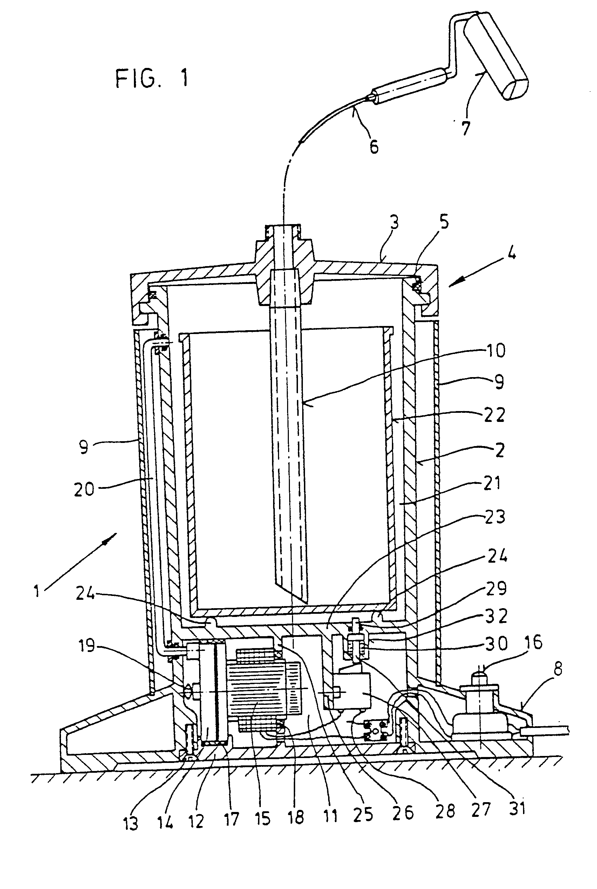

In der Zeichnung ist ein Ausführungsbeispiel des gemäß der Erfindung ausgebildeten Druckbehälters zur Aufnahme von zu fördernden Flüssigkeiten dargestellt und nachfolgend im einzelnen erläutert.

Der in der Zeichnung mit 1 bezeichnete Druckbehälter dient zur Aufnahme einer Farbflüssigkeit, die unter einem geringen Druck von z.B. 2,5-4 bar aus diesem über eine Schlauchleitung 6 einem Farbroller 7 zugeführt wird. Auf die Zylinderwandung 2 des Behälters 1 ist hierbei mittels eines Bajonettverschlusses 4 ein Deckel 3 gas- und flüssigkeitsdicht aufgesetzt, wobei zwischen diesen eine Dichtung 5 angeordnet ist. An dem Deckel 3 ist nicht nur die Schlauchleitung 6, sondern auch eine Steigleitung 10 befestigt, die in einen in einen in den Druckbehälter 1 eingesetzten, gesonderten Farbbehälter 22 hineinragt.

Um in dem Innenraum 21 des Behälters 1 einen Überdruck zu erzeugen, durch den die Farbflüssigkeit über die Steigleitung 10 und die Schlauchleitung 6 zu dem Farbroller 7 gedrückt wird, ist in einer im Bodenbereich des Druckbehälters 1 vorgesehenen Aufnahmekammer 11 ein Membrankompressor 14 eingesetzt, der durch einen Elektromotor 15, der vorzugsweise als Schwingankermotor oder als Tauchankermotor ausgebildet sein kann, antreibbar ist. Der Membrankompressor 14 wie auch der Elektromotor 15 sind zwischen dem Boden 23 des Druckbehälters 1 und einer die Aufnahmekammer 11 verschliessenden, mittels Schrauben 13 befestigten Platte 12 eingespannt, so daß besondere Halterungen für diesen Teil nicht erforderlich sind. Zur elastischen Lagerung und um die Betriebsgeräusche zu mindern, ist der Membrankompressor 14 und auch der Elektromotor 15 über Zwischenlagen 17 bzw. 18 aus elastisch verformbarem Werkstoff an dem Boden 23 bzw. an einem an diesen angeformten Steg 25 sowie der Platte 12 abgestützt.

Zum Einschalten des Elektromotors 15 dient ein durch Fußdruck betätigbarer Hauptschalter 16, der in einem der an dem Behälter 1 angebrachten Standfüße 8 eingebaut ist. Über eine Ansaugöffnung 19 saugt der Membrankompressor 14 im Betrieb Luft an, verdichtet diese und fördert sie über eine Druckluftleitung 20, die in einer der auf der Behälterwandung 2 befestigten Zierleiste 9 untergebracht ist und in dem oberen Bereich des Innenraumes 21 in diesen mündet, in den Druckbehälter 1.

Damit ausgeschlossen ist, daß sich in dem Innenraum 21 ein zu hoher Druck aufbaut, ist in den Stromkreis 28 zwischen dem Hauptschalter 8 und dem Linearmotor 15 ein Druckschalter 27 eingebaut, der an einem Steg 26 befestigt und in Abhängigkeit von dem in dem Innenraum 21 herrschenden Druck betätigbar ist. Dazu ist in dem Boden 23, auf dessen angeformten Noppen 24 der Behälter 2 abgestützt ist, ein von dem herrschenden Druck beaufschlagbarer in einem Gehäuse 32 angeordneter Kolben 29 vorgesehen, der entgegen der Kraft einer Rückstellfeder 30 verschiebbar ist und mit einem angeformten Schaltstößel 31 den Druckschalter 27 betätigt.

Steigt z.B. der Innendruck über einen vorgegebenen Wert an, so wird der Stromkreis, da der Kolben 29 entgegen der Kraft der Feder 30 nach unten verschoben wird, durch den Druckschalter 27 unterbrochen, sinkt dagegen der Innendruck wiederum ab, wird durch die Kraft der Feder 30 der Kolben 29 und der mit diesem fest verbundene Schaltstößel 31 nach oben bewegt und der Stromkreis des Elektromotors 15 ist erneut geschlossen, so daß der Membrankompressor 14 wiederum Druckluft erzeugen und in den Innenraum 21 des Druckbehälters 1 fördern kann.

**Patentansprüche**

1. Druckbehälter (1) zur Aufnahme von zu fördernden Flüssigkeiten, insbesondere zum kontinuierlichen Speisen eines über eine Schlauchleitung (6) an diesen angeschlossenen Farbrollers (7), eines Füllpinsels, einer Düse oder dgl. mit einer unter Druck stehenden Flüssigkeit, wobei zur Erzeugung des Förderdruckes ein in einer Aufnahmekammer angeordneter Drucklufterzeuger (14) vorgesehen ist, der mittels eines Druckschalters (27; 62) in Abhängigkeit von dem in dem Druckbehälter (1; 51) herrschenden Druck steuerbar ist, dadurch gekennzeichnet, daß der Drucklufterzeuger als Membran-Kompressor (14; 57) ausgebildet und in einer im Bodenbereich des Druckbehälters (1) eingeformten Aufnahmekammer (11; 56) angeordnet ist, daß der Membran-Kompressor (14) und/oder der Elektromotor (15) mittels einer die Aufnahmekammer (11) verschließenden Platte (12) zwischen dieser und dem Behälterboden (23) und/oder an diesen angeformten Stegen (25) über Zwischenlagen (17, 18) oder Dämpfungselementen (61) aus elastisch verformbarem Werkstoff eingeklemmt sind und daß der dem Membran-Kompressor (14; 57) zugeordnete Elektromotor (15; 58) als Linearmotor nach Art eines Schwingankermotors ausgebildet ist.

2. Druckbehälter nach Anspruch 1, dadurch gekennzeichnet, daß die Druckluftleitung (20; 59) des Kompressors (14; 57) im oberen Bereich des Druckbehälters (1; 51) in diesen mündet.

3. Druckbehälter nach Anspruch 1 oder 2, dadurch gekennzeichnet, daß die Druckleitung in einer auf der Außenwandung des Druckbehälters (1) angebrachten Zierleiste (9) eingesetzt ist.

4. Druckbehälter nach einem oder mehreren der Ansprüche 1 bis 3, dadurch gekennzeichnet, daß der Boden (23) des Druckbehälters (1) zur Abstützung eines Farbbehälters (22) oder dgl. mit mehreren Abstandsnocken (24) versehen ist.

5. Druckbehälter nach einem oder mehreren der Ansprüche 1 bis 4, dadurch gekennzeichnet, daß zur Betätigung des Druckschalters (27; 62) ein in den Boden (23) des Druckbehälters (1; 51) eingesetzter, entgegen der Kraft einer Rückstellfeder (30; 66) verstellbarer, von dem in dem Druckbehälter (1; 51) herrschenden Druck unmittelbar oder über eine Membran (67) beaufschlagbarer Kolben (29; 65) vorgesehen ist, dessen angeformter Schaltstößel (31) auf das Verstellglied (63) des Druckschalters (27; 62) einwirkt.

6. Druckbehälter nach einem oder mehreren der Ansprüche 1 bis 5, dadurch gekennzeichnet, daß in den Deckel (51) des Druckbehälters (52) ein von Hand entriegelbares Überdruckventil (70), ein Hauptschalter (69), ein Manometer oder dgl., eingesetzt sind.

7. Druckbehälter nach einem oder mehreren der Ansprüche 1 bis 6, dadurch gekennzeichnet, daß der Druckbehälter (1) mit drei oder mehreren im Bodenbereich angeordneten und seitlich abstehenden Standfüßen (8) versehen ist und daß in einen der Standfüße (8) ein durch Fußdruck betätigbarer Hauptschalte (16) eingesetzt ist.

## Revendications

1. Réservoir sous pression (1) pour la prise de liquides à acheminer, en particulier pour l'alimentation continuelle d'un rouleau à peindre (7), d'un pinceau, d'une buse ou similaire raccordés à ce réservoir à l'aide d'une tuyauterie flexible (6) et alimentés par un liquide se trouvant sous pression produite par un compresseur (14) disposé dans une chambre et commandé par un contacteur manométrique (27; 62) en fonction de la pression régnant dans le réservoir sous pression (1; 51), se caractérisant par le fait que le compresseur est un compresseur à membrane (14; 57) disposé dans une chambre (11, 56) pratiquée dans la partie inférieure du réservoir sous pression (1), que le compresseur à membrane (14) et/ou le moteur électrique (15) sont serrés à l'aide d'une plaque (12) obturant la chambre (11), entre la plaque et le fond du réservoir (23) et/ou des traverses (25) prévues sur ce dernier, moyennant des couches intermédiaires (17, 18) ou des éléments d'amortissement (61) en matière élastique déformable et que le moteur électrique (15; 58) appartenant au compresseur à membrane (14; 57) est conçu en tant que moteur linéaire du genre d'un moteur à ancre oscillante.

2. Réservoir sous pression d'après la revendication 1, se caractérisant par le fait que la conduite d'air comprimé (20; 59) du compresseur (14; 57) débouche dans la partie supérieure du réservoir sous pression (1; 51).

3. Réservoir sous pression d'après la revendication 1 ou 2, se caractérisant par le fait que la conduite sous pression est insérée dans une moulure (9) montée sur la paroi extérieure du réservoir sous pression (1).

4. Réservoir sous pression d'après une ou plusieurs des revendications 1 à 3, se caractérisant par le fait que le fond (23) du réservoir sous pression (1) est muni de plusieurs cames d'écartement (24) servant à l'appui d'un réservoir de peinture (22) ou similaire.

5. Réservoir sous pression d'après une ou plusieurs des revendications 1 à 4, se caractérisant par le fait que pour l'actionnement du contacteur manométrique (27, 62) il est prévu dans le fond (23) du réservoir sous pression (1; 51), un piston (29; 65) réglable contre la force d'un ressort de rappel (30; 66) et soumis directement ou par l'intermédiaire d'une membrane (67), à la pression régnant dans la réservoir sous pression (1; 51), et dont le poussoir de commande (31) agit sur l'élément de réglage (63) du contacteur manométrique (27; 62).

6. Réservoir sous pression d'après une ou plusieurs des revendications 1 à 5, se caractérisant par le fait qu'il est monté dans le couvercle (51) du réservoir sous pression (52), une valve de surpression (70) déverrouillable à la main, un contacteur principal (69), un manomètre ou similaire.

7. Réservoir sous pression d'après une ou plusieurs des revendications 1 à 6, se caractérisant par le fait que le réservoir sous pression (1) est muni de trois ou plusieurs pieds (8) placés dans la zone du fond et écartés latéralement et qu'il est monté dans un des pieds (8) un contacteur principal (16) actionné par la pression du pied.

## Claims

1. Pressure vessel (1) as receiver of liquids to be conveyed, particularly for continuous feeding a pressurized liquid to a paint roller (7), a fillable paint brush, a nozzle or the like connected via a hose line (6) to the pressure vessel, characterized in that in order to create the feeding pressure a compressor (14) is located in a chamber and controlled through a pressure switch (27; 62) dependent on the pressure in the pressure vessel (1; 51), characterized in that the compressor is a membrane compressor (14; 57) located in a chamber (11; 56) formed in the lower part of the pressure vessel (1), that the membrane compressor (14) and/or the electric motor (15) is clamped between a plate (12) closing the chamber (11) and the container bottom (23) and/or flanges (25) being parts thereof, by means of intermediate plates (17, 18) or damper elements (61) made from elastically deformable material and that the electric motor (15; 58) assigned to the membrane compressor (14; 57) is designed as linear motor like a swinging lever motor.

2. Pressure vessel according to claim 1, characterized in that the pressure line (20; 59) of the compressor (14; 57) is connected to the upper part of the pressure vessel (1; 51).

3. Pressure vessel according to claim 1 or 2, characterized in that the pressure line is located in an edging (9) mounted to the outer wall of the pressure vessel (1).

4. Pressure vessel according to one of the claims 1 through 3, characterized in that the bottom (23) of the pressure vessel (1) features several ridges (24) for carrying a paint container (22) or the like.

5. Pressure vessel according to one of the claims 1 through 4, characterized in that in order to manipulate the pressure switch (27; 62) a piston (29; 65) is provided in the bottom (23) of the pressure vessel (1; 51) and by the pressure of the pressure vessel (1; 51) directly or by means of a membrane (67) is controllable against the power of a reset spring (30; 66), the plunger (31) of which is engaging the actuator (63) of the pressure switch (27; 62).

6. Pressure vessel according to one of the claims 1 through 5, characterized in that a manually operable relief valve (70), a main switch (69), a pressure-gauge or the like are inserted into the cover (51) of the pressure vessel (52).

7. Pressure vessel according to one of the claims 1 through 6, characterized in that the pressure vessel (1) is provided with three or more stands (8) and that in one of the stands (8) a main switch (16) is inserted to be actuated by foot.

FIG. 1